# EUROPÄISCHE PATENTSCHRIFT

(11) **EP 0 511 472 B1**
(45) Veröffentlichungstag und Bekanntmachung des Hinweises auf die Patenterteilung: **23.11.1994**
(21) Anmeldenummer: 92103577.0
(22) Anmeldetag: 02.03.1992
(51) Int. Cl.: G06C 5/02, G11B 33/00, G11B 33/02, G11B 23/28, G06F 1/00

(54) **Abdeckvorrichtung zum Sperren des Zugriffs zu Speichereinheiten einer Datenverarbeitungseinheit**
Covering device for blocking the access to the memory of a data processing unit
Dispositif de couverture pour bloquer l'accès à la mémoire d'une unité de traitement de données

(30) Priorität: 12.03.1991 DE 9102939 U
(43) Veröffentlichungstag der Anmeldung: 04.11.1992
(73) Patentinhaber: Siemens Nixdorf Informationssysteme Aktiengesellschaft, 33102 Paderborn (DE)
(72) Erfinder: Löffler, Josef, W-8025 Unterhaching (DE); Stickel, Heinz, W-8038 Gröbenzell (DE)
(74) Vertreter: Fuchs, Franz-Josef, Dr.-Ing.

(56) Entgegenhaltungen:
- WO-A-87/02502
- DE-A- 3 702 821
- DE-U- 8 631 488

## Beschreibung

Die Erfindung betrifft eine Abdeckvorrichtung gemäß den Merkmalen des Oberbegriffs des Anspruchs 1.

Beim Einsatz von Datenverarbeitungseinheiten, beispielsweise Personalcomputern, besteht die Möglichkeit, die Verarbeitungseinheit durch Befehle über einen längeren Zeitraum hinweg, gegebenenfalls auch unbedient arbeiten zu lassen. Eine derartige Betriebsart kann auftreten bei einer Stapelverarbeitung, beim Ausdrucken von Daten, bei Datensicherungsläufen zum Übertragen von in einem Speichermedium gespeicherten Daten auf ein anderes Speichermedium oder bei der Zusammenarbeit in lokalen Netzen oder mit Großrechnern.

Bei einer derartigen Betriebsart kann nicht ausgeschlossen werden, daß eine Bedienperson zwischenzeitlich die Verarbeitungseinheit verläßt und sich anderen Arbeiten zuwendet. Außerdem ist auch bei einem normalen Betrieb mit Arbeitspausen oder Arbeitsunterbrechungen zu rechnen, in denen die Verarbeitungseinheit unbeaufsichtigt bleibt.

Wenn bei den obengenannten Betriebsarten die Verarbeitungseinheit unbeaufsichtigt bleibt, besteht die Gefahr, daß von den Speichereinheiten die Datenträger unerlaubter Weise entnommen werden.

Es ist daher bereits eine Vorrichtung zum Sperren des Zugriffs zu einer Verarbeitungseinheit bekannt, bei der eine verschiebbare Klappe vor den Öffnungen der Speichereinheiten anbringbar und mittels einer Schließeinrichtung abschließbar ist (DE 37 02 821 C2). Bei dieser bekannten Abdeckung befindet sich die verschiebbare Klappe hinter einem Ausschnitt in der Gehäusefrontplatte, wo sie durch seitliche an der Innenseite der Frontplatte vorhandene Halteelemente geführt wird. Ein Auswechseln einer beschädigten Klappe oder ein nachträglicher Einbau sind daher nur bei abgenommener Frontplatte möglich und deshalb, u.a. wegen zusätzlicher Maßnahmen am Gerät, sehr aufwendig.

Der vorliegenden Erfindung liegt deshalb die Aufgabe zugrunde, eine Abdeckvorrichtung der im Oberbegriff des Anspruchs 1 genannten Art so zu gestalten, daß sie am Gerät auch im Wege der Nachrüstung einfach anbringbar und dennoch so befestigt ist, daß die Abdeckung zwangsläufig beschädigt wird, wenn der Zugang zu den durch die Abdeckung gesicherten Speichereinheiten in unerlaubter Weise erzwungen wird.

Die Lösung dieser Aufgabe ergibt sich erfindungsgemäß durch die Merkmale des Anspruchs 1. Die erfindungsgemäße Abdeckvorrichtung hat den Vorteil, daß sie von außen aufsetzbar, am Gerät selbst keine besonderen Führungsmittel erfordert und trotzdem so gesichert befestigt werden kann, daß ein unbefugter Zugang zu einer wenigstens teilweisen Zerstörung der Abdeckung führen würde und damit sofort festgestellt werden könnte.

Vorteilhafte Weiterbildungen der Erfindung ergeben sich aus den Merkmalen der Unteransprüche.

Im folgenden wird ein Ausführungsbeispiel der Erfindung anhand der Zeichnung näher erläutert.
Dabei zeigen
- FIG 1: die Vorderansicht eines Tischrechnergehäuses,
- FIG 2: eine Seitenansicht des Tischrechnergehäuses in einer Schnittdarstellung entlang der Schnittlinie II-II.

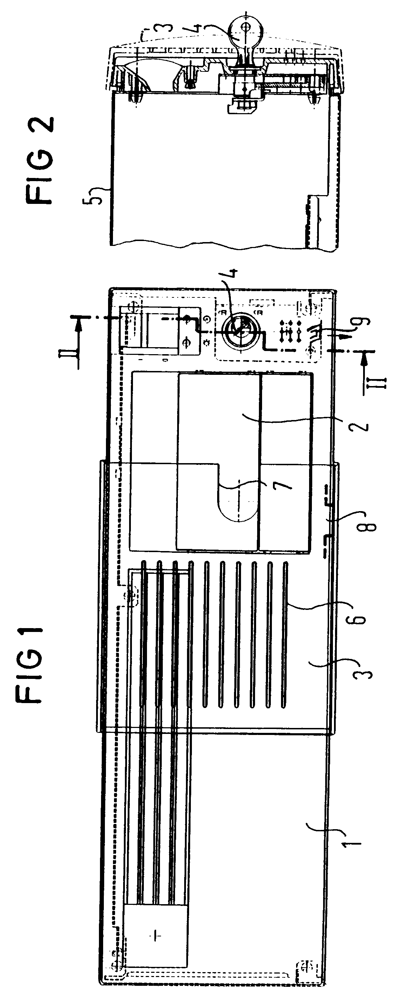

Die FIG 1 und 2 zeigen die Frontplatte 1 eines Tischrechnergehäuses mit mehreren in einem Ausschnitt der Frontplatte 1 vorgesehenen Aufnahmeplätzen für von vorne bedienbare Speicherlaufwerke 2. Zur Sicherung gegen einen unerlaubten Zugriff ist eine Schieberblende 3 vorgesehen, die von der Seite vor die Speicherlaufwerke 2 schiebbar und in der Endstellung mit Hilfe eines schlüsselbetätigbaren Schwenkhebelschlosses 4 verriegelbar ist. Die Schieberblende 3 hat eine im wesentlichen rechteckförmige Form und greift an den parallel zur Verschiebrichtung verlaufenden Kanten der Frontplatte 1 jeweils U-förmig hinter die Frontplatte 1, wobei die freien U-Schenkel jeweils in einen Spalt zwischen Frontplatte 1 und Rechnergehäuse 5 eintauchen. Dies bedeutet, daß eine verriegelte Schieberblende wegen der hintergreifenden U-Schenkel nicht einfach abgezogen werden kann und demzufolge für den Fall, daß sich jemand unberechtigt Zugang zu den Speichereinheiten verschaffen möchte, zumindest teilweise zerstört werden müßte. Der die Frontplatte 1 abdeckende rechteckförmige Teil der Schieberblende 3 ist leicht konvex gewölbt und enthält mehrere parallele Lüftungsschlitze 6, damit die Lüftung für die Laufwerke bei geschlossener Schieberblende 3 nicht beeinträchtigt wird. Die Schieberblende 3 reicht im geschlossenen Zustand bis in den Bereich des Schwenkhebelschlosses 4 und weist deshalb eine Aussparung in Form eines einseitig offenen Querschlitzes 7 auf, damit der Schlüssel in das Schwenkhebelschloß eingesteckt werden kann. Zur Verriegelung der Schieberblende 3 ist ein mit dem Schwenkhebelschloß im Innern des Rechnergehäuses mechanisch gekoppeltes Rastelement 9 vorgesehen, das im Sperrzustand in eine im Bereich eines der beiden U-Schenkel der Schieberblende 3 vorgesehene Einschnappmulde 8 eingreift. Dieses Rastelement ist z.B. mit einer Feder vorgespannt, so daß die Schieberblende auch im Sperrzustand des Schlosses nachträglich geschlossen und verriegelt werden kann.

## Patentansprüche

1. Abdeckvorrichtung zum Sperren des Zugriffs zu Speichereinheiten mit über die Frontseite (1) des zugehörigen Datenverarbeitungsgerätes zuführbaren bzw. entnehmbaren tragbaren Datenträgern, unter Verwendung eines vor die Speichereinheiten (2) schiebbaren Deckels (3), der im Sperrzustand mittels eines schlüsselbetätigbaren Schwenkhebelschlosses (4) verschließbar ist,
**gekennzeichnet durch** eine die Frontplatte (1) des Datenverarbeitungsgerätes an parallel zur Verschieberichtung verlaufenden Kanten U-förmig umgreifende Schieberblende (3), deren freie U-Schenkel die Frontplatte (1) hintergreifen und durch eine im U-Schenkelbereich der Schieberblende (3) vorgesehene Einschnappmulde (8) für ein im Sperrzustand räumlich zugeordnetes Rastelement (9) des Schwenkhebelschlosses (4).

2. Abdeckvorrichtung nach Anspruch 1,
**dadurch gekennzeichnet**, daß die Schieberblende (3) leicht konvex gewölbt ist.

3. Abdeckvorrichtung nach Anspruch 1 oder 2,
**dadurch gekennzeichnet**, daß die Schieberblende (3) mehrere Lüftungsschlitze (6) aufweist.

4. Abdeckvorrichtung nach einem der vorhergehenden Ansprüche,
**dadurch gekennzeichnet,** daß die im Sperrzustand in den Bereich des Schwenkhebelschlosses (4) hineinreichende Schieberblende (3) eine den Schlüsselzugang zum Schloß freigebende Aussparung aufweist.

5. Abdeckvorrichtung nach Anspruch 4,
**dadurch gekennzeichnet,** daß die Aussparung als einseitig offener Querschlitz (7) ausgebildet ist.

## Claims

1. Covering device for blocking access to storage units having portable data carriers that can be inserted or removed via the front side (1) of the associated data processing device, using a cover (3) which can be slid in front of the storage units (2) and can be locked in the blocking state by means of a key-operated pivoting lever lock (4), characterized by a sliding panel (3) which in a U-shaped manner encloses the front panel (1) of the data processing device on edges extending parallel to the direction of displacement, the free U-legs of which sliding panel engage behind the front panel (1), and by a snap-fit depression (8) provided in the U-leg region of the sliding panel (3) for a detent element (9) of the pivoting lever lock (4) spatially associated therewith in the blocking state.

2. Covering device according to Claim 1, characterized in that the sliding panel (3) has a slight convex curve.

3. Covering device according to Claim 1 or 2, characterized in that the sliding panel (3) has a plurality of ventilation slits (6).

4. Covering device according to one of the preceding claims, characterized in that the sliding panel (3), which in the blocking state extends into the region of the pivoting lever lock (4), has a recess which allows the key access to the lock.

5. Covering device according to Claim 4, characterized in that the recess is designed as a transverse slit (7) which is open on one side.

## Revendications

1. Dispositif de fermeture servant à bloquer l'accès à des unités de mémoire comportant des supports de données portables qui peuvent être introduits ou retirés par la face avant (1) de l'appareil de traitement de données associé, moyennant l'utilisation d'un couvercle (3), qui est déplaçable devant les unités de mémoire (2) et qui, à l'état bloqué, peut être fermé au moyen d'une serrure à levier basculant (4) pouvant être actionnée à l'aide d'une clé, caractérisé par un panneau coulissant (3) qui enserre avec une forme en U la plaque avant (1) de l'appareil de traitement de données au niveau de bords qui sont parallèles à la direction de déplacement et dont les branches en U libres s'engagent derrière la plaque avant (1), et par une cavité d'encliquetage (8) prévue dans la zone de la branche en U du panneau coulissant (3) pour un élément d'encliquetage (9), qui est associé spatialement dans l'état bloqué, de la serrure à levier basculant (4).

2. Dispositif de fermeture suivant la revendication 1, caractérisé par le fait que le panneau coulissant (3) possède une forme cintrée, légèrement convexe.

3. Dispositif de fermeture suivant la revendication 1 ou 2, caractérisé par le fait que le panneau coulissant (3) possède plusieurs fentes d'aération (6).

4. Dispositif de fermeture suivant l'une des revendications précédentes, caractérisé par le fait que le panneau coulissant (3), qui, à l'état bloqué, pénètre dans la zone de la serrure à levier basculant (4) , possède un évidement qui dégage l'accès de la clé à la serrure.

5. Dispositif de fermeture suivant la revendication 4, caractérisé par le fait que l'évidement est agencé sous la forme d'une fente transversale (7) ouverte unilatéralement.
